Europäisches Patentamt

European Patent Office

Office européen des brevets

(19)

(11) **EP 1 004 916 A1**

(12) **EUROPEAN PATENT APPLICATION**

(43) Date of publication:
**31.05.2000 Bulletin 2000/22**

(51) Int Cl.7: **G02B 17/00**, B60R 1/00

(21) Application number: **99650112.8**

(22) Date of filing: **25.11.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **25.11.1998 US 199907**
**27.07.1999 US 361814**

(71) Applicant: **DONNELLY CORPORATION**
**Holland Michigan 49423 (US)**

(72) Inventors:
- **Schofield, Kenneth**
  **Holland, Michigan 49423 (US)**
- **Bos, Brent J.**
  **Tucson, Arizona 85712 (US)**
- **Larson, Mark L.**
  **Grand Haven, Michigan 49417 (US)**

(74) Representative: Brophy, **David et al**
**F.R. Kelly & Co.**
**27 Clyde Road**
**Ballsbridge**
**Dublin 4 (IE)**

(54) **Wide angle imaging system for vehicle**

(57)    A wide-angle image capture system for providing a wide-angle field of view of an area immediately exteriorly of a vehicle. The system includes a convex aspheric, asymmetric reflective surface which reflects an image toward an image capture device, via a substantially flat mirrored surface, both of which are compactly packaged within a panel of the vehicle. The shape of the convex reflector provides a reflected image that has a minimal amount of distortion in critical areas of the image immediately adjacent to the vehicle, so that additional processing of the image prior to it being displayed to a vehicle operator is minimized. The wide angle imaging system may comprise an outer negative or wide angle group of lenses for receiving the wide angle field of view and directing a virtual image toward a positive, converging or focusing group of optics, which further refract and focus the image and provide a focused image to an image capture device. The focusing group of lenses preferably comprises three plastic optic elements, which include a diffractive element and aspheric surfaces to correct for color, distortion and other aberrations in the wide angle virtual image received from the wide angle group of lenses. The wide angle group of lenses are also preferably formed of a plastic material, such as polycarbonate or acrylic, and include a diffractive element on one of the elements. The imaging system thus provides a low cost, light weight and compact wide angle focusing system which does not include expensive and fragile precision optic and/or glass elements.

Fig. 2

EP 1 004 916 A1

**Description**

BACKGROUND OF THE INVENTION

This invention relates generally to rear-view vision systems for vehicles and, more particularly, rear-view vision systems which provide the vehicle operator with wide angle scenic information of the area immediately rearward of the vehicle, typically while the vehicle is traveling in reverse. While the invention is illustrated in a rear-view vision system, it may be applied to other viewing directions, as well as to non-vehicular applications.

A long felt need in the art of vehicle vision systems, such as rear-view systems, has been to provide an operator of a vehicle with wide angle scenic information of an area around the vehicle, such as directly rearward of the vehicle when the vehicle is traveling in reverse. Neither interior rear-view mirrors nor side exterior mirrors allow for visibility of the area immediately rearward of the vehicle's bumper, which is the information most critical to the vehicle operator when backing up. Therefore, various camera-based rear view vision systems have been proposed to provide visibility of this blind spot.

To date, camera-based rear vision systems for vehicles backing up have not obtained widespread commercial acceptance. In one form of these systems, a camera with a standard lens is located on the rearward portion of the vehicle to provide a view of the area behind the vehicle. However, a standard lens fails to capture a wide-angle view of the area, thus failing to provide the vehicle operator with an image of the entire critical area directly rearward of the vehicle.

In order to provide a wider angle view of the rearward area, a wide-angle lens system may be used with the camera to capture the critical area. While this provides a broader field of view and thus may include the critical area immediately rearward of the vehicle, the wide-angle lens results in extreme field curvature and a greatly distorted image of the area. Additional lenses are required to correct the distortion, further adding to the cost and complexity of the system. Because the wide-angle lens and the additional corrective lenses are typically precision optics, not only is the initial cost to manufacture and implement them very high, but so is the cost to replace them, should they be damaged or broken on the vehicle in the vulnerable area in which they are typically located.

Another difficulty with the proposed multi-element lens and camera systems is that they are difficult to package within the small area available at the rearward portion of the vehicle. These systems may comprise multiple optic elements and are typically assembled as a horizontal cylindrical column and positioned within the trunk lid or rear panel of the vehicle, which results in the camera system protruding forward into the trunk space. Generally, it is desirable to avoid installing any components which extend into the trunk space other than those necessary for the opening and closing of the trunk lid and those that can easily be packaged along the floor or sides of the vehicle within the trunk space, such that the overall trunk space is maximized. It is undesirable to package components within this space not only because trunk space is considered valuable to consumers, but also because consumers tend to over-pack their trunk spaces, and then force the trunk lid closed, resulting in damage to any components trapped between the packed items and the trunk lid. This is an even greater concern with the proposed multi-element glass lens systems, since the many optic elements may be fragile and thus prone to breaking. These camera systems are also undesirable for use in a van, pick-up truck or the like, where the cylindrical column would extend forward into an open space, and also be prone to damage.

Another concern with the multiple element systems is that they are very susceptible to the image received being adversely affected by stray light. Because the lens is positioned at the rear panel of the vehicle, it receives light from all rearward directions. While only the light representing the rearward image is directed toward the camera, other light may enter the cylindrical column of lenses and reflect from the multiple elements within the column, causing additional aberrations and glare in the received image.

SUMMARY OF THE INVENTION

The present invention is directed toward enhancing visibility to the driver of a vehicle by providing a low-distortion, relatively low-cost wide-angle field of view of the area directly exteriorly of a vehicle which is capable of being compactly packaged within a portion of the vehicle.

This is accomplished according to an aspect of the present invention by a vehicular vision system having a reflector which is positionable on a portion of a vehicle. The reflector reflects an image of a view exteriorly of the vehicle, which is received by an image capture device. A display system displays a low-distortion image from an output of the image capture device.

According to another aspect of the present invention, the vision system may comprise an asymmetric image capturing system that asymmetrically captures an image of an area exteriorly of a vehicle. A display positioned within the vehicle displays an image from an output of the asymmetric image capturing system.

According to another aspect of the present invention, the vision system may be compactly packaged by positioning a substantially flat mirrored reflective surface along an optic path between the reflector and image capture device, such that the reflective surface redirects the image reflected from the reflector toward the image capture device. Reflecting the image in such a manner allows the system to be packaged in a very small area within a panel of the vehicle, thereby avoiding the necessity of a deep recess into the vehicle body and greatly reducing the overall amount of space taken up within the vehicle.

According to yet another aspect of the present invention, a convex reflector and the image capture device define an optical path therebetween and are oriented relative to one another such that the optical path is directed off of an axis of the convex reflector. By orienting the image capture device off-axis, the image capture device receives an image reflected from the convex reflector that does not include a reflection of the image capture device itself. This reduces the amount of electronic processing required to correct the reflective image as the image capture device does not have to be removed from the image, while also avoiding a blind spot in the image that results from the removal of the image capture device reflection. Also, this allows the image capture device to be positioned within the vehicle body where it is not exposed to the elements.

According to another aspect of the present invention, the vision system may include an image capture device that is adapted to reduce distortion of the image reflected by the reflector. The display system displays an image synthesized from an output of the image capture device such that the display system in combination with the image capture device reduces image distortion. This may be accomplished by the image capture device receiving the reflected image on an array made of a non-uniform distribution of a plurality of imaging pixels. The non-uniform distribution corresponds to the distortion in the reflected image such that when the display system receives and displays the image on a substantially uniform array, a substantially non-distorted image of a view rearward of the vehicle is displayed to a vehicle operator.

A convex reflector according to another aspect of the invention is both asymmetric relative to an axis and aspheric to minimize distortion and aberrations in critical areas of the image reflected, yet still provides a broad field of view to the vehicle operator. The shape of the convex reflector according to another aspect of the invention has varying radii of curvature in both longitudinal and lateral directions, such that the convex reflector is of a shape that minimizes distortion in the reflected image and produces a desired field of view. Preferably, a field of view is produced that is approximately 140° horizontal and approximately 60° vertical. This field of view encompasses areas surrounding the rear of the vehicle without capturing sky and other irrelevant information.

According to still yet another aspect of the present invention, an image capture system may capture discontinuous images of scenic information exteriorly of the vehicle. A display then displays an image, which is preferably substantially non-distorted, of the scenic information communicated from the image capture system.

The image capture system may include first and second reflectors and an image capture device. The first reflector may be positioned so as to reflect a first image of scenic information adjacent one side of the vehicle toward the image capture device, and the second reflector may be positioned so as to reflect a second image of scenic information adjacent another side of the vehicle toward the image capture device.

In a further modification, the image capture system further includes a first image capture device and a second image capture device, the first reflector reflecting the first image toward the first image capture device and the second reflector reflecting the second image toward the second image capture device.

The image capture system can also include a reflective splitter. The splitter is positioned such that a first reflective surface is positioned along a first optic path between the first reflector and the image capture device, and a second reflective surface is positioned along a second optic path between the second reflector and the image capture device. The first and second reflective surfaces redirect the first and second images, respectively, reflected from the first and second reflectors, respectively, toward the image capture device.

In a system as described above, which captures a discontinuous image of scenic information, the discontinuous image may comprise two images taken in substantially opposite directions from one another.

The present invention may be packaged within the small space constraints of the trunk of a vehicle, and is much less costly to manufacture due to the small number of components and the simplicity of the design of each component. The present invention may also eliminate extensive electronic processing and additional lenses to correct for excessive distortion and aberrations within the image before it is displayed to the vehicle operator. In this manner, the present invention provides a low cost system which produces a maximum field of view with a minimal amount of distortion and aberrations.

The present invention is directed toward enhancing exterior visibility to the driver of a vehicle by providing an imaging system, which provides a wide angle field of view of the area directly exteriorly of a vehicle, that is compact, durable and inexpensive to manufacture. The imaging system of the present invention is capable of being compactly packaged within a portion of the vehicle and requires a minimal number of elements in order to minimize the size, cost and weight of the system.

According to another aspect of the present invention, a vehicular vision system provides scenic information of an area around of a vehicle. The vision system comprises a focusing lens having a receiving end and a focusing end, a wide angle lens positioned at the receiving end of the focusing lens and an image capture device which is adapted to receive an image refracted through the focusing lens. The wide angle lens includes an outer negative optic and an inner negative optic positioned between the outer negative optic and the receiving end of the focusing lens. The wide angle lens further includes a diffractive element. The wide angle lens directs a virtual image of a wide angle field of view of a scene exteriorly of the vehicle toward the receiving end of the focusing lens. The virtual image of the wide angle field of view is focused by the focusing lens onto the image capture device.

Preferably, at least a portion of the wide angle lens is at least occasionally positioned exteriorly of the vehicle. The wide angle lens may be movable between a storage position interior of the vehicle and an operable position exterior of the vehicle.

In one form, the wide angle lens elements are formed from one of polycarbonate, acrylic and crown glass materials. The focusing lens preferably also comprises optic elements formed from one of polycarbonate and acrylic materials.

In a further aspect of the invention there is provided a vehicular vision system comprising:

a wide angle lens group adapted to be mounted on a portion of a vehicle for refracting a virtual image of an exterior view from the vehicle, thereby creating a wide angle refracted image, the wide angle lens group including an outer negative optic and an inner negative optic, and the wide angle lens group comprising at least one of a polycarbonate and acrylic material;

a focusing lens group which receives the refracted image and which focuses the refracted image onto an image plane;

an image capture device positioned on the image plane to receive the focused image from the focusing lens group, the wide angle lens group and the focusing lens group defining an optic path between an outer end of the wide angle lens group and the image capture device;

an image distortion correction process whereby an image captured by the vision system is processed to correct distortion therein; and

a display which displays a substantially non-distorted image of the scenic information, the non-distorted image being communicated from the image distortion process.

In yet a further aspect of the invention a vehicular vision system is provided comprising a reflector, an image capture device positioned to receive an image reflected from the reflector, and a display system. The reflector has a generally central axis and is positionable on a portion of a vehicle. The reflector and the image capture device define an optic path therebetween and are oriented such that the optic path is directed off of the axis of the reflector. The display system displays a synthesized image from an output of the image capture device.

A further aspect of the invention provides a vision system comprising an image capture system positioned so as to capture an image of scenic information exteriorly of a vehicle, an image distortion correction process whereby an image captured by the image capture system is processed to correct distortion therein, and a display which displays a substantially non-distorted image of the scenic information, the non-distorted image being communicated from the image distortion process.

In another preferred aspect of the invention, a vehicular vision system which includes an image capture system for capturing an image of scenic information exteriorly of a vehicle, also includes a ranging device for determining a distance between the vehicle and an object within the captured image. A display is provided for displaying an image synthesized from an output of the image capture system and range data for an object in the displayed image.

According to another aspect of the present invention, a vehicular vision system for providing scenic information of an area exteriorly of a vehicle comprises a focusing lens, a wide angle lens, an image capture device and a display system. The focusing lens includes a first focusing optic, a middle focusing optic and a third focusing optic, wherein the middle focusing optic is positioned along an optic path between the first and third focusing optics. The wide angle lens directs a virtual image of a wide angle field view of a scene exteriorly of the vehicle toward the focusing lens. The wide angle lens has an outer wide angle optic and an inner wide angle optic, where the outer wide angle optic is positioned toward an exterior of the vehicle and the inner wide angle optic is positioned along the optic path between the outer wide angle optic and the focusing lens. The image capture device is adapted to receive an image refracted through the focusing lens, such that the virtual image of the wide angle field of view is focused by the focusing lens onto the image capture device. The display system then displays an image in response to an output of the image capture device. Preferably, the focusing lens comprises one of polycarbonate and acrylic, while the wide angle lens comprises at least one of polycarbonate, acrylic and crown glass.

Therefore, the present invention includes a minimal number of optic elements and may be packaged within the small space constraints of the trunk of a vehicle. The invention is much less costly to manufacture over conventional systems due to the number of plastic components, such as polycarbonate and/or acrylic components. In this manner, the present invention provides a low cost and compact system which produces a maximum field of view to the vehicle operator.

These and other objects, advantages, and features of this invention will become apparent upon review of the following specification in conjunction with drawings.

BRIEF DESCRIPTION OF THE DRAWINGS

Fig. 1 is a rear perspective view of an automobile according to the invention;
Fig. 2 is a cross-sectional view along the line II-II in Fig. 1;
Fig. 3 is a perspective view of a convex reflector useful with a preferred embodiment;
Fig. 4 is a side elevation taken along lines IV-IV in Fig. 3;
Fig. 5 is a side elevation taken lines V-V in Fig. 3;
Fig. 6 is a schematic of the coordinate system corresponding to an equation that defines the surface of the convex reflector;
Fig. 7 is the same view as Fig. 2 of an alternate embodiment of the invention;
Fig. 8 is a view taken along the line VIII-VIII in Fig. 7;
Fig. 9 is the same view of Fig. 1 of another alternate embodiment of the invention;
Fig. 10 is a view rearward of the vehicle captured and displayed by the present invention;
Fig. 11 is the same view of Fig. 2 of another alternate embodiment of the invention;
Fig. 12 is the same view of Fig. 2 of another alternate embodiment of the invention;
Fig. 13 is a top view of a vehicle incorporating another embodiment of the present invention;
Fig. 14 is a rear perspective view of an automobile according to another embodiment of the present invention;
Fig. 15 is a cross-sectional view of the lenses of the present invention along the line XV - XV in Fig. 14;
Fig. 16 is a view of a camera useful with the current invention taken along the line XVI-XVI in Fig. 14;
Fig. 17 is a top plan view of a vehicle incorporating alternate embodiments of the present invention; and
Fig. 18 is a schematic of the coordinate system corresponding to the equations which define the lens elements of the present invention.

DESCRIPTION OF THE PREFERRED EMBODIMENTS

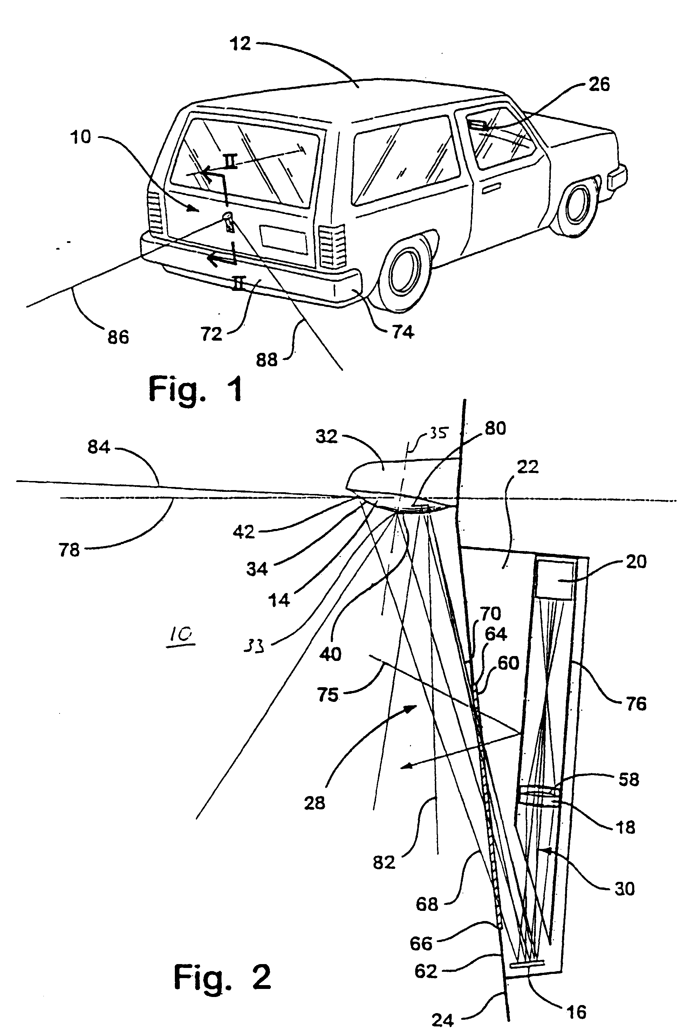

Referring now to the drawings and the illustrative embodiments depicted therein, a wide-angle image capture system, generally illustrated at 10, provides an operator of a vehicle 12 with scenic information of an area immediately exteriorly, and preferably rearward, of vehicle 12, which may be an automobile, a light truck, a van, a large truck, a sport utility vehicle, or the like (Fig. 1). Image capture system 10 includes a reflector 14 which is preferably substantially bent outwardly or convex and an image capture device 20 compactly packaged within a recess 22 in a rear panel 24 of vehicle 12, thereby minimizing the trunk space required, as shown in Fig. 2. Image capture system 10 may further include a substantially flat reflective surface or mirror 16 and a diffractive lens 18. As the image is received by image capture device 20, the image is electronically communicated to a display screen 26 located within vehicle 12, where the image is displayed for the vehicle operator.

Convex reflector 14 reflects a reflected image, generally represented as lines 28, of the area exteriorly of vehicle 12, downward toward reflective surface 16. Reflective surface 16 may be positioned slightly within rear panel 24, and angled to redirect a reflected image 28 from convex reflector 14 substantially upward and slightly forward toward image capture device 20, which is correspondingly oriented along an optic path between image capture device 20 and convex reflector 14, to receive redirected image 30. The precise locations of image capture device 20 and reflective surface 16 are determined relative to convex reflector 14 such that the distance between convex reflector 14 and image capture device 20, via reflective surface 16, minimizes image aberrations while providing the required field of view. Diffractive lens 18, image capture device 20 and reflective surface 16 may all be positioned within rear panel 24 of vehicle 12, with diffractive lens 18 also being positioned along the optical path. Diffractive lens 18 provides color correction and may further provide image distortion correction to the image reflected and redirected toward image capture device 20. A redirected image, generally represented as lines 30, received by image capture device 20, is then electronically communicated to display 26, which displays the synthesized scenic information to the operator of vehicle 12. The image capture system 10 may be efficiently operated, such that image capture device 20 and/or display 26 are activated only when scenic information is desired by the driver. For example, the image capture device 20 and/or display 26 may be activated in response to an input from the vehicle, such as when the vehicle's reverse gear is engaged or may be driver activated, such as by voice activation or the like.

Convex reflector 14 is rigidly mounted to a protective housing or bracket 32 on rear panel 24 with its apex 33 directed substantially downwardly such that the reflector is convex downward. The image capture system may also be positioned in the detent area of the rear panel where a license plate is secured. Furthermore, the system may be included within the housing of a license plate lamp, or within a license plate frame or holder to ease an aftermarket application of the system. In a minivan, sport utility vehicle or the like, the system may be positioned within or immediately adjacent the rim molding of the rear window or backlight. The reflector may be positioned on an exterior surface of the window with the image capture device being within the vehicle, so that the reflected image is directed through the window to the image capture device. The orientation would be preferably similar to that of Fig. 2, with the rear panel 24 and transparent panel 60 combining to form the rear window of the vehicle.

Alternatively, an image capture system or even a refractive lens camera system may be mounted within a rear spoiler of a vehicle. This location not only allows the reflector or camera lens to be directed more directly downward, beyond the rear of the vehicle, but also allows for simplified installation of the system as an aftermarket device. Another embodiment of the present invention may position an image capture system reflector or camera lens within a vehicle logo or badge on the rear panel of the vehicle. When reverse is engaged by the driver, a motorized drive then moves the badge and the reflector, camera or system rearward to a position extending outward from the vehicle, in order to capture an exterior field of view from the vehicle. This orientation further protects the system when it is not in use and also allows the system to be moved substantially rearward or otherwise exteriorly when it is in use, so as to capture scenic information immediately rearward of the vehicle and even in a downward direction if so desired.

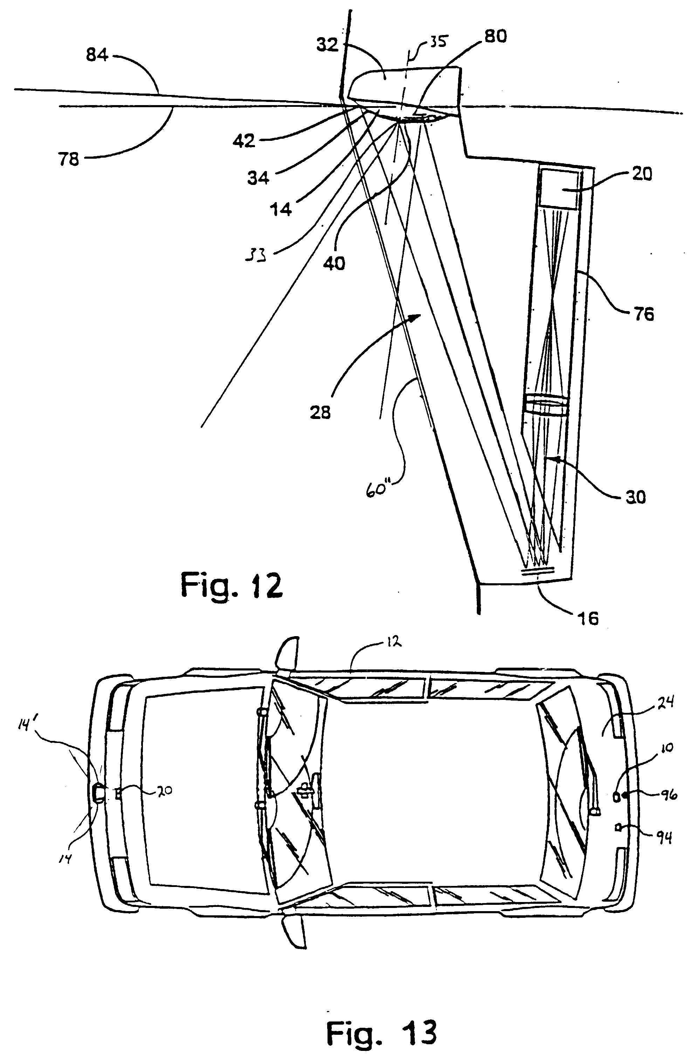

Furthermore convex reflector 14 may be positioned elsewhere on the vehicle and directed so as to provide scenic information to the driver of other areas surrounding the vehicle, such as to one side or the other or both sides, of the vehicle. Additionally, a second convex reflector 14' may be implemented, with the two reflectors 14 and 14' being directed substantially opposite to one another to reflect discontinuous images toward one or more image capture devices (Fig. 13). This provides the driver of vehicle 12 with scenic information of both sides of the vehicle simultaneously. For example, the reflectors may be positioned at the front of the vehicle to provide information of the area immediately forward and to either side of vehicle 12. Such mounting and orientation schemes are not limited to the reflective system of the present invention, as one or more refractive lens cameras may be implemented as described above to provide exterior views from the vehicle.

Convex reflector 14 may be made compact, preferably being less than approximately 18 mm in diameter, and has a smooth curved reflective surface 34 which provides a broad field of view of the scene immediately rearward of vehicle 12. Curved reflective surface 34 of convex reflector 14 is preferably a metallized surface which may comprise a chromium, aluminum, silver, stainless steel, titanium or alloys thereof. The reflective surface 34 may be a first surface reflector or a second surface reflector. Because convex reflector 14 is positioned exteriorly of the vehicle, convex reflector 14 may be heatable to defog or defrost the reflective surface 34. Convex reflector 14 may therefore be formed by a glass coated with an indium tin oxide transparent conductor or a doped tin oxide, or may include a wire mesh or a conductive coating mesh. Furthermore, the outer surface of the outer cover or of convex reflector 14 itself may be coated with an anti-soiling or anti-wetting coating, such as a silicone material, which may provide either a hydrophobic or hydrophilic property to the reflector.

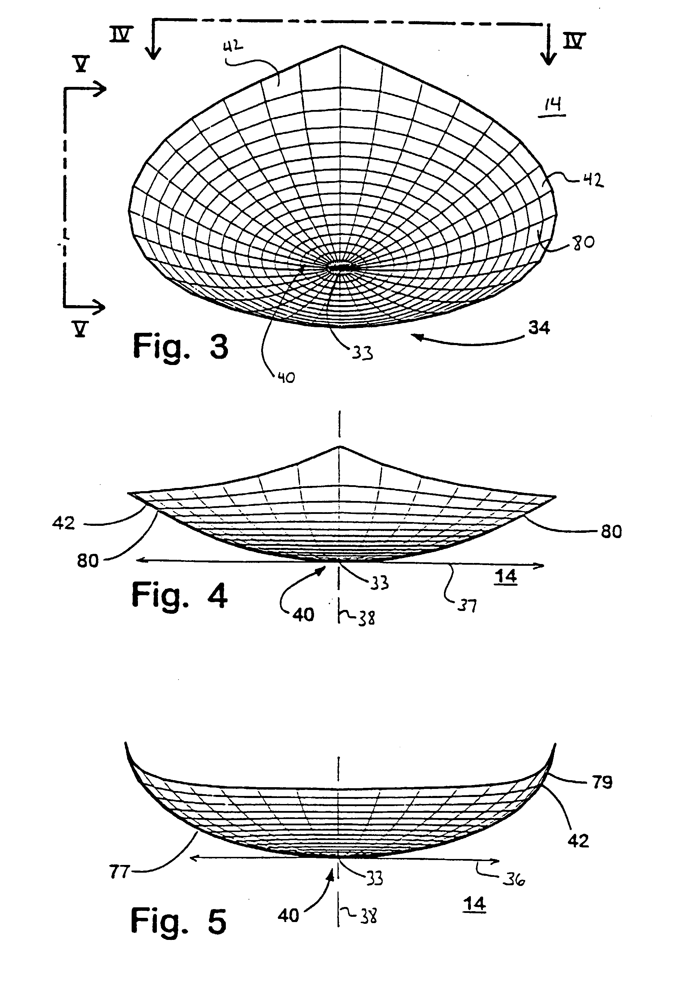

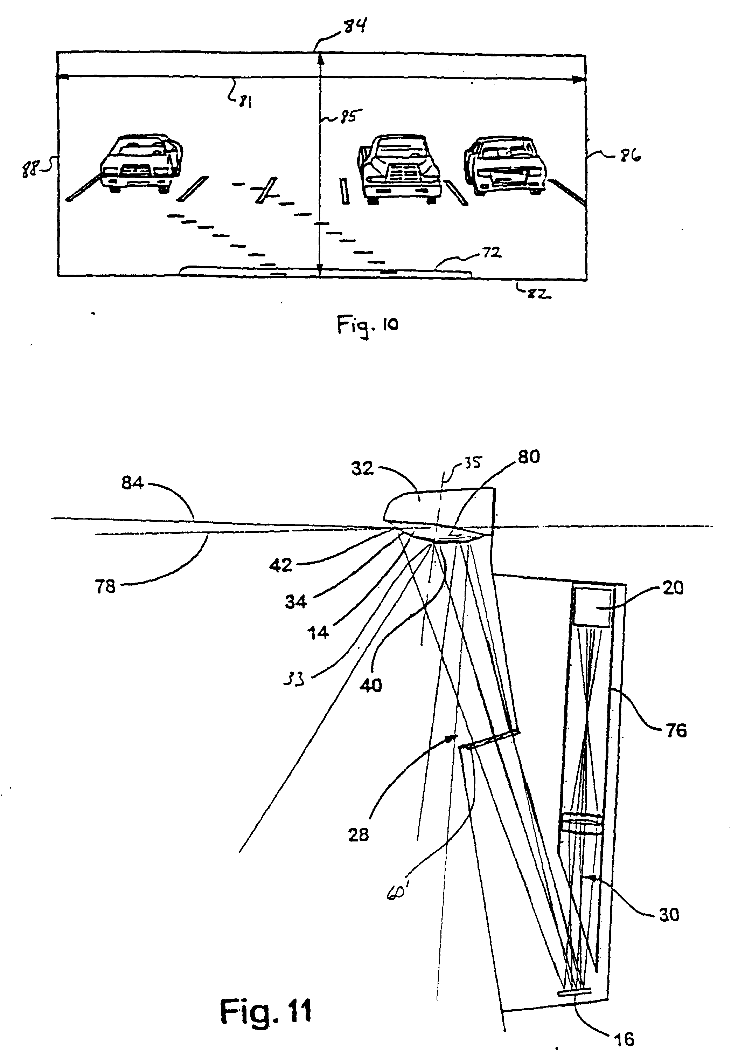

In the preferred embodiment, convex reflector 14 has a reflective surface 34 that is both aspheric and asymmetrical about a central axis 35, which passes through apex 33 and is normal to the surface at the apex. This configuration is designed to minimize distortion in the critical portions of the image reflected, while still providing a broad field of view in the horizontal direction which is larger than the field of view in the vertical direction. This is accomplished by the asymmetric shape and varying radii of curvature in both directions along curved surface 34, as best shown in Fig. 3. The radii of curvature preferably vary between approximately one inch and 200 inches along the curved surface 34 of the reflector 14. As shown in Fig. 10, the varying radii of curvature allow convex reflector 14 to provide a wide field of view horizontally, in order to capture scenic information around the vehicle, while providing less of a field of view vertically, to avoid capturing unnecessary and even distracting information. Preferably, the horizontal field of view, shown generally as 81, spans approximately 140 degrees, while the vertical field of view, shown generally as 85, spans only approximately 60 to 90 degrees, where the vertical field is limited to substantially below a horizontal plane passing through the reflector (Fig. 10).

The geometry of convex reflector 14 may vary depending on its application, with an optimal equation being determined by implementing an algorithm to derive the equation and calculate the necessary constraints. The preferred geometry of convex reflector 14 is shown in Figs. 3, 4 and 5 and defined by the mathematical equation:

$$z = \frac{c_x x^2 + c_y y^2}{1 + \sqrt{1-(1+k_x)c_x^2 x^2-(1+k_y)c_y^2 y^2}} \; ; \qquad c_x = {}^1/_{r_x} \; ; \; c_y = {}^1/_{r_y} \; ;$$

where x, y and z are coordinates on curved surface 34 along an x-axis 36, a y-axis 37 and a z-axis 38, respectively, $r_x$ is the radius of curvature of curved surface 34 along x-axis 36, $r_y$ is the radius of curvature along y-axis 37, and $k_x$

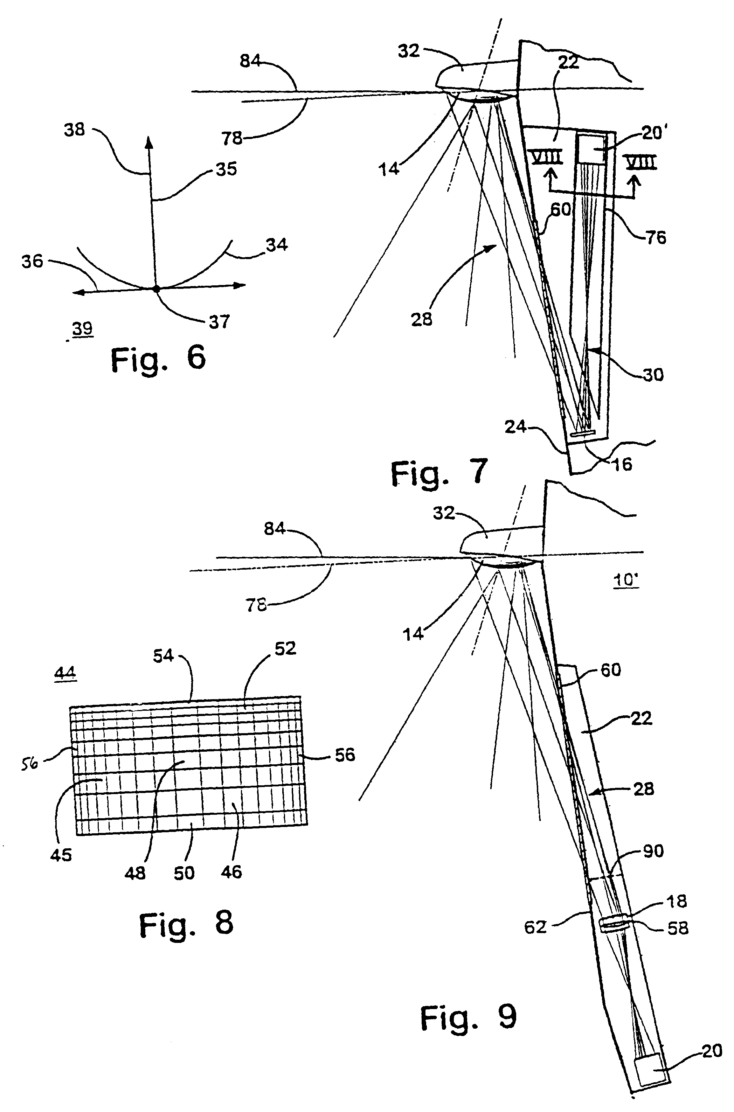

and $k_y$ are constants. A diagram of a coordinate system 39 for which these variables and constants apply is shown in Fig. 6, where z-axis 38 is along axis 35 of curved reflective surface 34. The resultant shape of convex reflector 14 is therefore hyperbolic, having different radii of curvature in both the x and y directions. As best shown in Figs. 4 and 5, convex reflector 14 has larger radii of curvature in a center region 40 and smaller radii of curvature near its outer edges 42, thereby allowing the lens to reflect an image having less distortion in the center region than a parabaloid shaped reflector of a similar size would produce. This is due to the larger radii of curvature providing a substantially flat surface in center region 40, resulting in less distortion in the reflected image, while the smaller radii of curvature near its outer edges providing a more substantially curved surface, which results in the reflected image being compressively distorted, as the greater curved surface reflects a larger amount of scenic information from a given amount of surface area.

Convex reflector 14 is oriented on vehicle 12 its reflective surface facing generally downwardly such that the critical area immediately rearward of the vehicle reflects from curved reflective surface 34 at center region 40 and forward region 77, while the area rearward of vehicle 12 that is closer to the horizon, represented generally by line 78 in Fig. 2, reflects from curved reflective surface 34 at rearward region 79 of outer edges 42. Similarly, the areas on either side of vehicle 12 reflect from curved reflective surface 34 at side regions 80 of outer edges 42. Due to the varying radii of curvature, the overall reflected image 28, especially in the critical regions immediately rearward of vehicle 12, includes substantially less distortion than an image reflected from a standard symmetrical and spherical or parabolic reflector, while still providing a wide-angle field of view.

Convex reflector 14 of the preferred embodiment, therefore, provides a broad field of view of the area immediately rearward of vehicle 12, as shown in Figs. 1 and 10. The area included in reflected image 28 preferably extends from substantially directly downward, as represented by line 82, including a vehicle body reference, such as a rear portion 72 of a rear bumper 74 of vehicle 12, up to an upper level 84 just above horizon 78. The shape of curved reflective surface 34 is designed to provide a minimal amount of distortion of the body reference and in the critical areas immediately rearward thereof, while allowing a greater amount of distortion in the area near the horizon 78 and side regions 86 and 88 of the image where the scenic information is less critical to the operator. Such an image, with varying degrees of distortion, is reflected toward image capture device 20 due to the orientation and asymmetry of curved reflective surface 34.

Image capture device 20 receives reflected image 28 from convex reflector 14. Preferably, image capture device is oriented relative to convex reflector 14 off of axis 35 of convex reflector 14, such that the image received by image capture device 20 does not include a reflection of image capture device 20 itself. Although various camera devices may be utilized, a pixelated-imaging array is preferred for image capture device 20. An example of such an imaging array is a CMOS imaging array or the like, a detailed description of which is disclosed in commonly assigned United States Patent 5,670,935, issued to Schofield et al., the disclosure of which is hereby incorporated herein by reference. However, other devices such as CCD may also be used. The preferred image capture device 20 is a low cost camera device, yet still provides an effective means for receiving reflected image 28.

A redirecting element, which is preferably a substantially flat reflective surface 16 may be included in the image capture system along the optic path to receive reflected image 28 from convex reflector and redirect this image toward image capture device 20. Reflective surface 16 may be a metallized surface an may further be a first or second surface reflector, as discussed above with respect to convex reflector 14. Reflective surface 16, may be rigidly mounted within recess 22 of rear panel 24 such that reflective surface 16 is oriented off-axis from axis 35 of convex reflector 14, and is oriented to redirect the downwardly projected image from convex reflector 14 upward and slightly forward into recess 22. This allows for easier packaging of image capturing system 12 by limiting the vertical space required while also requiring only a minimal amount of additional forward space in recess 22. However, reflective surface 16 may be oriented to redirect the image in other directions, such as to one side or another, toward a correspondingly positioned image capture device, in order to satisfy the vehicle packaging requirements. Furthermore, by redirecting reflected image 28 with reflective surface 16, the possibility of stray light being received by image capture device 20 is greatly reduced, as discussed further below.

A corrective element, which is preferably a diffractive lens 18, may also be located along the optic path between convex reflector 14 and image capture device 20. Diffractive lens 18 corrects the color focusing within the reflected image. Diffractive lens 18 is preferably a plastic diffractor which is a low cost yet effective means to correct for color aberrations in the reflected image. However, diffractive lens 18 may instead be a two-element acromat or the like. Diffractive lens 18 may further include an aspheric refractive lens element 58 attached thereto to further correct for distortions and aberrations within redirected image 30. In the illustrated embodiment, refractive lens element 58 is a transparent plastic lens element, having a varying width, such that the image passing through refractive lens 58 is refracted in varying degrees, corresponding to the magnitude of distortion in the image received by refractive lens 58. Therefore, either by itself, or in conjunction with image capture device 20, refractive lens 58 functions as a means for correcting distortions within the image.

A cover glass or transparent panel 60 preferably is positioned along a rearward surface 62 of rear panel 24, and encases reflective surface 16, diffractive lens 18 and image capture device 20 within recess 22 of vehicle 12, thereby protecting them from outside road and weather conditions, while passing the light rays into the trunk. Transparent panel 60 is substantially coplanar with rearward surface 62 and allows reflected image 28 to enter recess 22 and be received by reflective surface 16. Transparent panel 60 has an upper edge 64 and a lower edge 66, and is of a size such that only the desired image reflected downward from convex reflector 14 is received and redirected by reflective surface 16. Rays of light 68, representing upper edge 84 of the rearward image, enter recess 22 through transparent panel 60 just above lower edge 66, while rays of light 70, representing lower edge 82 of the desired rearward image, enter recess 22 just below upper edge 64 of transparent panel 60. Other light entering recess 22 at an angle directed toward reflective surface 16, that is outside the desired range of the rearward view, is substantially reduced by non-transparent rear panel 24. Transparent panel 60 may be substantially vertical and coplanar with the vehicle panel or may alternatively be substantially horizontal to allow the reflected image to reflect downward, through the panel (Fig. 11). By orienting the transparent panel 60' substantially perpendicular to the rays of light reflecting from convex reflector 14, glare and scattering of light on the panel is substantially reduced. Alternatively, a transparent panel 60" may further encase convex reflector 14 within the vehicle panel (Fig. 12).

Image capture device 20 and diffractive lens 18 may further be encased within baffles or blinds, represented generally by 76, to minimize any additional stray light from being received by or reflected within image capture system 10. Baffles 76 reduce the amount of stray light, as represented generally by line 75 in Fig. 2, from entering recess 22 at an angle which is not toward reflective surface 16, and thus from reflecting within diffractive lens 18 and image capture device 20. Therefore, the primary light received by image capture device 20 is light constituting the desired rearward image reflected by convex reflector 14 via reflective surface 16. Other light is shielded from image capture device 20 due to rear panel 24, baffles 76, and the orientation of reflective surface 16, thereby greatly reducing the likelihood of glare within the captured image.

After the image has reflected from convex reflector 14 and redirected from reflective surface 16, it is received by image capture device 20 and communicated to display 26. The off-axis orientation of the asymmetric convex reflector 14 and image capture device 20 allows convex reflector 14 to direct an image toward image capture device 20, via reflective surface 16, that does not include a reflection of image capture device 20. The signal from image capture device 20 to display 26 may be communicated over any form of transmission including fiber optic cables or the like.

In an alternate embodiment, such as that shown in Fig. 7, an image capture device 20' is capable of reducing distortion of the captured image. In the illustrated embodiment, this is accomplished by a non-uniform array 44 of electro-optic pixels 45, as shown in Fig. 8. Non-uniform array 44 has a coarse distribution of pixels 46 in a center region 48 and a lower region 50, while having a finer distribution of pixels 52 along an upper edge 54 and side regions 56. This non-uniform pixilation of array 44 receives reflected image 28 and varies correspondingly with the magnitude of distortion in reflected image 28 from convex reflector 14. An example of non-uniform pixelated arrays is disclosed in commonly assigned United States Patent 5,796,094, issued to Schofield et al., the disclosure of which is hereby incorporated herein by reference. The received image is then communicated to display 26, which includes a uniform array of display pixels (not shown), corresponding to non-uniform array 44, for simultaneously displaying the image captured by non-uniform array 44. The combination of the non-uniform pixilation of array 44 and the uniform pixilation of display 26 has the effect of reducing distortion of reflected image 28 as would be apparent to the skilled artisan. More particularly, center region 48 and lower region 50 of non-uniform array 44 receive portions of reflected image 28 that are reflected from center region 40 and forward region 77 of convex reflector 14, where the distortion is minimized. Conversely, the finer distribution of pixels 52 on non-uniform array 44 receive portions of reflected image 28 having greater distortion, which are reflected from outer edges 42 of convex reflector 14 and represent upper area 84 and side regions 86 and 88 of the scene rearward of vehicle 12. Therefore, when finer pixel distribution 52 is communicated and synthesized onto the uniform array, the image received by finer pixels 52 is expanded, thereby correcting for the compressive distortion in these areas of the image. While this may require some interpolation between finer pixels 52, the resultant image displayed to the vehicle operator, as shown in Fig. 10, has reduced distortion, especially in the critical areas, without extensive electronic processing of the image or requiring additional refractive lens elements. It should be understood that the distribution of pixels is selected to remove distortion from the reflected image and may be different for different reflector designs.

In another alternate embodiment, shown in Fig. 9, a wide-angle image capture system 10' is provided without a substantially flat reflective surface. Image capture system 10' includes a reflector 14, and an image capture device 20 and diffractive lens 18, which are positioned along an optical path extending downward from reflector 14 into rear panel 24 of vehicle 12. The focal length of image capture system 10', which is the distance between reflector 14 and image capture device 20, is substantially the same as the focal length of image capture system 10. This focal length requires that image capture device 20 and diffractive lens 18 of image capture system 10' extend further downward into rear panel 24 than the components of image capture system 10.

Although the illustrated embodiments preferably include a convex reflector having an asymmetric, aspheric reflective surface, other alternate embodiments may be provided. One such alternative includes a spherical reflective surface. Such a surface may be economically defined by a portion of a polished ball bearing (not shown). Spheric or parabolic shaped reflectors such as these may provide for even lower cost components for the system, as they may be made from standard, readily available parts. However, as discussed above, images reflecting from such reflectors have greater overall distortion then images reflecting from convex reflector 14 of the preferred embodiment. This additional distortion may require further processing of the reflected image prior to it being displayed on display system 26 within vehicle 12.

Therefore, it is seen that a vehicular vision system is disclosed which comprises a minimal number of components and which allows for a compact packaging of the system. Due to the shape of the convex reflector, the present invention does not require a wide-angle lens and several additional glass refractive lenses to correct for distortion. This results in a low-cost system having only the minimal number of components, none of which are expensive glass lenses or the like. Further, due to the fact that wide-angle image capture system extends downward within a rear panel of the vehicle 12, both packaging and durability concerns for this system are greatly improved upon over typical horizontally extending systems that extend forward into the trunk space of the vehicle. Additionally, by implementing the flat reflective mirror to re-direct the reflected image toward the image capture device, the present invention not only reduces the affect of stray light on the system, but also minimizes the amount of space required for packaging. Instead of requiring a cylindrical column protruding forward into the space within a portion of the vehicle, the present invention merely rests within a small recess along a portion of the vehicle.

The shape of the convex reflector of the present invention also reduces the amount of processing required to result in a substantially non-distorted image being communicated to the display screen. Furthermore, due to the off-axis orientation of the image capture device from the convex reflector, the present invention avoids the blind spot in the center of the reflected image, as the reflector is angled slightly rearward, and the image capture device is oriented such that the reflected image received by the image capture device does not include a reflection of the image capture device itself. This not only avoids a blind spot, but further reduces the amount of processing required to remove the reflection from the image.

Similarly, other aspects of the present invention function to provide a substantially non-distorted view of the area immediately rearward of the vehicle without requiring extensive electronic processing of the image. In particular, a diffractive lens element may be included to provide optimal focusing of the colors on the image capture device. In addition, a refractive lens element 58 may be positioned adjacent the diffractive lens to also correct for some of the distortion in the image before it is received by the image capture device. These elements also minimize other aberrations within the image, such as coma and astigmatism.

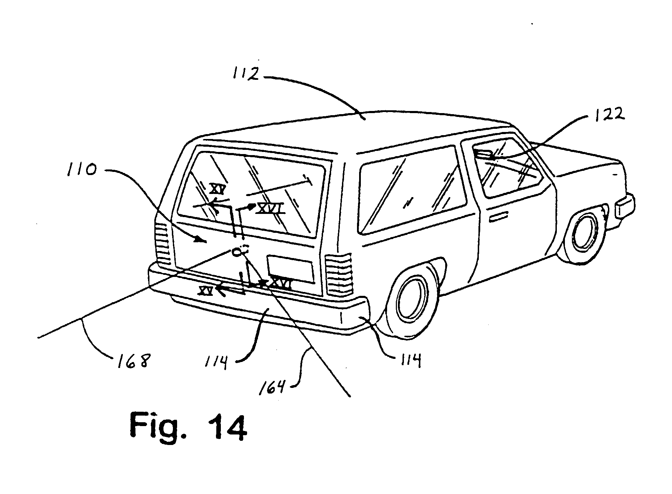

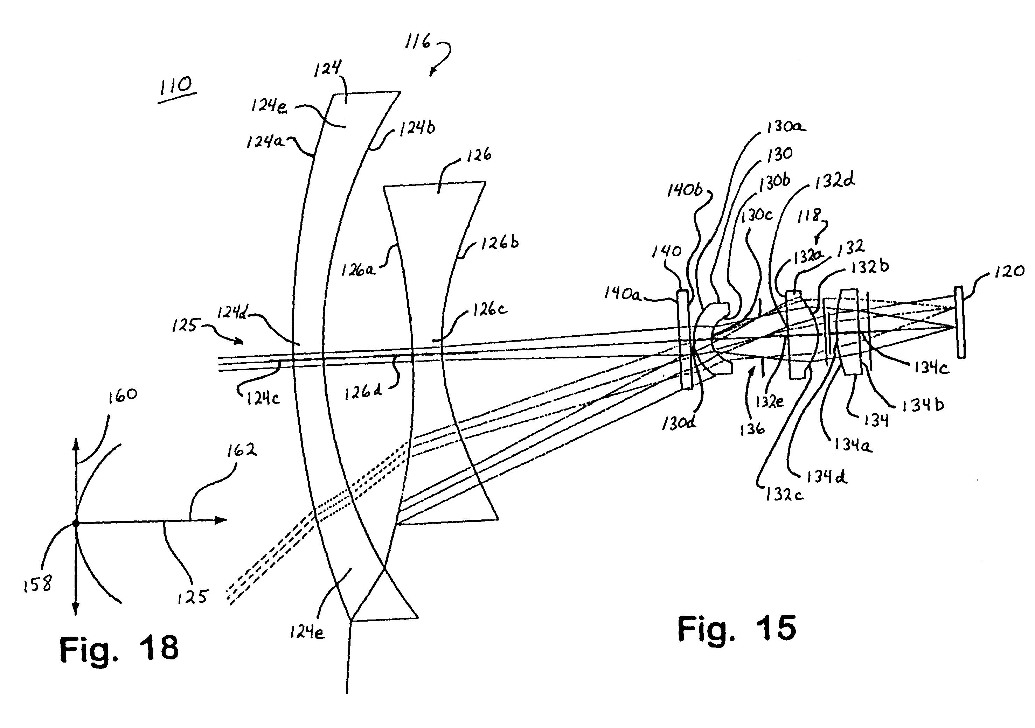

Referring now to Figures 14-18, a wide angle imaging system, generally illustrated at 110, provides an operator of a vehicle 112 with scenic information of an area immediately exteriorly, such as rearwardly, of vehicle 112, which may be an automobile, a light truck, a van, a large truck, a sport utility vehicle or the like (Fig. 14). As shown in Fig. 15, wide angle imaging system 110 includes a negative or diverging group of optic elements or wide angle lens 116, a positive or converging group of optic elements or focusing lens 118 and an image capture device 120. Wide angle group of optics 116 provides a virtual image of a wide angle field of view of a scene exteriorly of vehicle 112 toward a receiving end 118a of focusing lens 118. Preferably, the wide angle lens 116 provides a wide angle field of view of at least 160 degrees. Image capture device 120 is positioned at a focusing end 118b of focusing lens 118. Focusing lens 118 receives the wide angle virtual image from wide angle group of optics 116 and focuses the image onto image capture device 120. As the image is received by image capture device 120, the image may be electronically communicated to a display screen 122 located within vehicle 112, where the image may be displayed for the vehicle operator. Alternately, an output of image capture device 120 may be provided to a control (not shown) for controlling an accessory of vehicle 112, such as headlamps, windshield wipers or the like.

Preferably, wide angle lens 116 and focusing lens 118 of the present invention provide a rearward or exteriorly directed image to display 122 similar to the image provided by the wide angle image capture system disclosed in commonly assigned United States patent application, Serial No. 09/199,907, filed on November 25, 1998, by Brent J. Bos et al., the disclosure of which is hereby incorporated herein by reference. The present invention is also useful in other vehicular vision systems of the type disclosed in commonly assigned United States Patent Nos. 5,550,677 and 5,670,935, issued to Schofield et al., or rearview vision systems of the type disclosed in commonly assigned United States patent application, Serial No. 08/921,160, filed August 29, 1997, by Brent J. Bos, the disclosures of which are hereby incorporated herein by reference. It is further envisioned that the lenses of the present invention may also be useful in other vehicular or non-vehicular systems which include an image capture device. For example, wide angle imaging system 110 may be implemented in a vehicle headlamp dimmer control, preferably of the type disclosed in commonly assigned United States Patent No. 5,796,094 issued to Schofield et al., a rain sensor, preferably of the type disclosed in commonly assigned PCT application, International Publication No. WO 99/23828, published May 14, 1999, the disclosures of which are hereby incorporated herein by reference, or other vehicular or even non-vehicular vision or control systems.

Wide angle lens 116 preferably includes an outer meniscus optic element 124 and a second inner optic element 126. Outer optic 124 is a diverging or negative element such that a virtual image of the wide angle field of view exteriorly of the vehicle is refracted through outer optic 124 toward inner optic 126. Preferably, the wide angle field of view provides a field of view angle of approximately 170°. This allows the wide angle field of view to include a body reference associated with the vehicle, such as a portion of the vehicle bumper 114 or the like.

Outer optic 124 is a generally curved, negative element which preferably has a diameter in a range of approximately 26.5 mm to 38.5 mm and a thickness of between 1.0 mm and 6.0 mm at a center axis 124c. Most preferably, outer optic 124 has a diameter of approximately 34.38 mm and a thickness of approximately 2.0 mm. Outer optic 124 is curved toward the exterior scene such that an outer surface 124a has a radius of curvature within a range of approximately 40 mm to 700 mm, while an inner surface 124b has a radius of curvature within a range of approximately 20 mm to 40 mm. Most preferably, the radius of curvature on outer surface 124a is approximately 95.6736 mm and the radius of curvature of inner surface 124b is approximately 30.00 mm. Outer optic 124 is preferably molded from a polycarbonate or acrylic material, but may be alternately formed from a crown glass material or the like for improved durability, without affecting the scope of the present invention.

Inner optic 126 is positioned substantially adjacent to and coaxially inward of inner surface 124b of outer optic 124 along an optic path 125 between outer optic 124 and image capture device 120. Inner optic 126 is also preferably formed from a plastic material such as polycarbonate, acrylic or the like. Inner optic 126 preferably includes a diffractive element such as a diffractive grating or diffractive surface on or adjacent to its outer surface 126a. The diffractive element corrects for color in the refracted virtual image, including spherochromatism and chromatic aberrations generated as the image is refracted through outer optic 124. Diffractive element 126a may vary depending on the material selected for inner element 126. For example, if inner element 126 is formed of a glass material, then the diffractive element or surface may not be necessary. However, additional glass or plastic elements may then be necessary to compensate for the lack of image correction by the glass element.

Preferably, inner optic 126 has oppositely curved surfaces, such that an inner surface 126b of inner element 126 is an outwardly curving hyperbolic, aspheric surface, while the diffractive element on outer surface 126a is curved inwardly toward inner surface 126b. Accordingly, inner element 126 is narrow in a middle region 126c at a center axis 126d and thickens radially outwardly therefrom. The virtual image which is refracted through outer optic 124 then further refracts through inner negative element 126, such that it diverges as it approaches focusing lens 118. Preferably, inner element 126 is approximately 1.0 mm to 6.0 mm thick at its narrow middle or center region 126c and has a clear effective diameter of approximately 20 mm to 28 mm. Most preferably, the thickness of inner element 126 is approximately 2.0 mm and the diameter is approximately 22.50 mm.

Inner surface 126b is preferably curved outwardly, opposite to diffractive surface 126a, and preferably has a radius of curvature between approximately 5 mm and 30 mm. Most preferably, the radius of curvature of inner surface 126b is approximately 23.3399 mm. Preferably, inner surface 126b is aspheric and has a surface defined by the following equation:

$$(1) \qquad z = \frac{cy^2}{1 + \sqrt{1-(1+K)c^2y^2}} \; ; \qquad c = \frac{1}{r_{xy}} \; ;$$

where $x$, $y$ and $z$ are coordinates on the inner surface 126b along an x-axis 158, a y-axis 160 and a z-axis 162, respectively, as shown in Fig. 18, $r_{xy}$ is the radius of curvature to each point on the surface corresponding to an $x$ coordinate and a $y$ coordinate, where $y$ is the height above the center or optical axis 126d, and $K$ is a conic constant. Preferably, $K$ is selected to be within a range of approximately -1 to -20 and, most preferably, $K$ is approximately -13.3619.

Outer diffractive element or surface 126a is oppositely curved from inner surface 126b and preferably has a radius of curvature within a range of approximately 20 mm to 60 mm. Most preferably, the radius of curvature of outer diffractive element 126a is approximately 35.3824 mm. The diffractive element functions to alter the phase of lightwaves that pass therethrough. Preferably, diffractive element 126a adds a phase (Φ) to the lightwaves according to the following equation:

$$(2) \qquad \Phi = A_1\rho^2 + A_2\rho^4 \; ;$$

where $\rho$ is a radial aperture coordinate divided by 1 mm and $A_1$ and $A_2$ are constants. Preferably $A_1$ is within a range of approximately 15 to 55 and $A_2$ is within a range of approximately -0.01 to -0.5. Most preferably, $A_1$ is approximately 47.4149 and $A_2$ is approximately -0.1463.

Inner optic 126 is preferably a plastic element, such as acrylic or polycarbonate, to facilitate forming the diffractive element 126a thereon in a cost-effective manner, since the diffractive pattern may be molded onto the surface as the optic element is formed. For example, the diffractive element may be formed by using the principles disclosed in commonly assigned U.S. Patent 5,538,674, issued to Nisper, the disclosure of which is hereby incorporated herein by reference. This provides a low cost yet effective means to correct the color aberrations in the refracted image. The hyperbolic aspheric surface 126b is preferably included to further correct for distortions and aberrations within the refracted image from outer optic 124, such that the image passes therethrough and is refracted in varying degrees, preferably corresponding to the magnitude of distortion in the image received by inner optic 126.

Preferably, wide angle lens 116 is assembled as a unit and is adaptable for use with a separate focusing lens unit. As assembled, inner wide angle optic 126 is preferably spaced inwardly along optic path 125 from outer optic 124 such that outer surface 126a is spaced from inner surface 124b by approximately 4 mm to 10 mm. Most preferably, these optics 124 and 126 are separated along their axes 124c and 126d by approximately 6.000 mm along optic path 125. The assembled unit may then be secured to or adjacent to receiving end 118a of focusing lens 118 in a conventional manner.

Focusing lens 118 is positioned inwardly of negative or wide angle lens 116, such that focusing lens 118 is positioned along optic path 125 between inner negative optic 126 and image capture device 120 and within a panel or other exterior structure of vehicle 112. Focusing lens 118 receives the image refracted through wide angle lens 116 and focuses a focused image onto image capture device 120. Preferably, the present invention includes a positive or focusing group of lenses which are commercially available as a set or triplet of plastic lenses such as acrylic lenses. For example, a three element lens useful with the present invention is available as an assembled unit and manufactured and marketed as an EL Series of lenses by Applied Image Group/Optics based in Tucson, Arizona. Focusing lens 118 preferably includes three optic elements: an outer focusing element 130, a middle focusing element 132 and an inner focusing element 134. Together these three optics are known in the art and are available as a plastic triplet. Most preferably, the elements of focusing lens 118 are formed from an acrylic or polycarbonate material.

Although commercially available as an assembled unit, the following briefly discusses the preferred specifications for each optic element within focusing lens 118. Outer focusing element or optic 130 is a negative or diverging optic positioned at receiving end 118a of focusing lens 118 and is generally C-shaped or convexly curved toward wide angle lens 116. Outer focusing element 130 includes a curved, elliptical and aspheric surface on an inner surface 130b and a curved outer surface 130a, which has a radius of curvature that is larger than a radius of curvature of inner surface 130b. Most preferably, the radius of curvature of outer surface 120a is approximately 3.0730 mm, while the radius of curvature of inner surface 130b is approximately 1.600 mm. Preferably, inner surface 130b is aspheric and defined by equation (1) above, with the conic constant $K$ equal to approximately -0.2723. The thickness of outer focusing optic 130 is preferably approximately 1.2 mm through a center region 130c along a center axis 130d. Outer element 130 receives the refracted virtual image from wide angle lens 116 and functions to partially correct the image as the image is refracted and inverted through outer element 130 and toward middle element 132.

Middle focusing element 132 is a positive or converging optic and receives an inverted image from outer element 130 and refracts the image to further correct for distortions and aberrations within the image. Outer surface 132a of middle element 132 is preferably slightly curved toward outer element 130, while an inner surface 132b includes an oppositely curved surface with an elliptical aspheric portion 132c thereon. Preferably, outer surface 132a has a radius of curvature of approximately 166.3208 mm, while the aspheric portion 132c of inner surface 132b is oppositely curved with a radius of curvature of approximately 3.5109 mm. The aspheric portion 132c is preferably further defined by equation (1) above, with $K$ equal to approximately -0.5270. The thickness of middle optic 132 is preferably approximately 2.0 mm through a center region 132d generally along its optic axis 132e. Middle element 132 refracts and directs the image toward inner element 134.

Preferably, an aperture stop 136 is positioned between outer element 130 and middle element 132. Aperture stop 136 provides an opening for the light rays to pass through and is preferably between approximately 1.0 mm and 5.0 mm in diameter. Most preferably, the diameter of the aperture stop opening is between approximately 2.0 mm and 2.5 mm. Aperture stop 136 functions to restrict the amount of light rays, which represent the image to be received by image capture device 120, which pass from outer focusing element 130 to middle focusing element 132. By providing a wider aperture, the image brightness and definition may be increased, while the depth of field and contrast of the image are correspondingly decreased. The aperture size may be selected according to the specific application and desired output of wide angle imaging system 110. Furthermore, the precise location of aperture stop 136 may be adjusted according to the specific application. Preferably, aperture stop 136 is positioned approximately 3.374 mm inwardly along optic path 125 from inner surface 130b of outer element 130 and approximately 1.770 mm outwardly from outer surface 132a of middle element 132.

Inner focusing element or optic 134 is also a positive optic and receives the image from middle element 132 and directs the image towards a focusing plane which corresponds to image capture device 120. Inner element 134 preferably includes an outwardly curved outer surface 134a which has a diffractive element thereon oriented toward middle element 132 and a slightly outwardly curved aspheric surface on its opposite inner surface 134b. This allows inner element 134 to further correct for color and to further converge and focus the image onto image capture device 120.

Preferably, outer surface 134a of inner focusing optic 134 has a radius of curvature of approximately 9.3651 mm. The diffractive element on outer surface 134a preferably alters the phase ($\Phi$) of the lightwaves as defined by equation (2) above. Preferably, the constants $A_1$ and $A_2$ are selected for outer surface 134a such that $A_1$ is equal to approximately -71.9397 and $A_2$ is equal to approximately -0.3594.

Inner surface 134b is curved in the same direction as outer surface 134a and preferably has a radius of curvature of approximately 809.8961 mm. Inner surface 134b is an even aspheric surface which is preferably defined by the following equation:

$$(3) \qquad z = \frac{cy^2}{1 + \sqrt{1-(1+K)c^2 y^2}} + \alpha y^4 \; ; \qquad c = \frac{1}{r_{xy}} \; ;$$

where $x$, $y$ and $z$ are coordinates on the inner surface 134b along an x-axis 158, a y-axis 160 and a z-axis 162, respectively, as shown in Fig. 18, $r_{xy}$ is the radius of curvature to each point on the surface corresponding to an $x$ coordinate and a $y$ coordinate, where $y$ is the height above an optical axis 134c of inner focusing optic 134, $\alpha$ is a constant and $K$ is a conic constant. Preferably, $\alpha$ is selected to be approximately 0.0006 and $K$ is equal to approximately zero. The thickness of inner focusing optic 134 is preferably 1.5 mm through a center region 134d.

Preferably, focusing lens 118 is assembled as a unit such that an inner surface 130b of outer optic 130 is positioned outwardly, and approximately 5.144 mm, from outer surface 132a of middle optic 132 along their optic axes 130d and 132e, respectively. Aperture stop 136 is preferably positioned between outer optic 130 and middle optic 132 as discussed above. Inner focusing optic 134 is positioned inwardly from middle optic 132 such that inner surface 132b of middle optic 132 and outer surface 134a of inner optic 134 are separated by approximately 1.247 mm along their optic axes 132e and 134c, respectively.

Optionally, an optical filter 140 may be included at or substantially adjacent to receiving end 118a of focusing lens 118. The optical filter 140 is preferably provided to filter out infrared and/or near infrared rays of light which may otherwise be received by image capture device 120. Optical filter 140 thus functions to improve the color in the image provided by image capture device 120 to display 122. Optical filter 140 is preferred if image capture device 120 is a color camera or sensor, such as a CMOS or CCD sensor, which includes silicon sensors capable of sensing infrared light. In cases where optical filter 140 is included in wide angle imaging system 110, adjustments may be made to the positioning and shape of the other elements in order to correct for any aberrations which may be introduced by optical filter 140. Preferably, optical filter 140 has substantially flat outer and inner surfaces 140a and 140b, respectively, and is approximately 0.7 mm thick. Optical filter 140 is preferably formed from a glass material such as BK7 glass. Inner surface 140b of optical filter 140 is preferably spaced along optic path 125 approximately 0.25 mm from outer surface 130a of outer focusing optic 130. Alternately, optical filter 140 may be an adjustable electro-optic filter of the type disclosed in commonly assigned United States provisional patent application, Serial No. 60/135,657, filed May 24, 1999, by Mark L. Larson and Brent J. Bos, the disclosure of which is hereby incorporated herein by reference.

When imaging system 110 is assembled and implemented on vehicle 112, outer wide angle optic 124 is preferably positioned along an exterior portion of a vehicle 112. Focusing lens 118 is preferably positioned interiorly of vehicle 112 from wide angle lens group 116 such that inner surface 126b of inner wide angle optic 126 is approximately 8 mm to 25 mm from outer surface 140a of optical filter 140 along optic path 125. Most preferably, this separation distance is approximately 16.00 mm. Image capture device 120 may then be positioned inwardly of focusing lens 118. Preferably, focusing lens 118 provides a focal distance from inner surface 134b of inner optic 134 to image capture device 120 of approximately 4.0 mm to 10.0 mm. Additionally, focusing lens 118 preferably provides an effective focal length range of approximately 1.6 mm to 2.1 mm.

Wide angle imaging system 110 may be rigidly mounted on a rear panel 113 of vehicle 112 and directed substantially rearward of vehicle 112. The imaging system may also be positioned in a recessed area of the rear panel where a license plate is secured. Furthermore, the system may be included within the housing of a license plate lamp, or within a license plate frame or holder, in order to ease an aftermarket application of the system. In a minivan, sport utility vehicle or the like, the imaging system may be positioned within or immediately adjacent to the rim molding of the rear window or back light. Alternately, the wide angle imaging system may be mounted within a rear spoiler of a vehicle or may position an outer wide angle lens or optic within a vehicle logo or badge on the rear panel of the vehicle, as discussed above with respect to wide angle imaging system 10.

Because outer optic 124 is positioned toward an exterior 112a of vehicle 112 such that an outer surface 124a may be exposed to the elements outside of vehicle 112, outer surface 124a may be coated with a protective coating to protect outer optic 124 from deterioration or damage due to exposure to the elements. This protective coating preferably comprises an organic haricot, an inorganic haricot, or an organic/inorganic compound. Additionally, the protective coating may include ultra violet absorbers or stabilizers to protect outer optic 124 from UV radiation degradation. This coating or other additional coatings substantially reduces the susceptibility of the optic to abrasion and/or ultra violet degradation, thereby providing a substantially clear and durable glass-like appearance to outer optic 124. Preferably, the coating is of the type disclosed in commonly assigned EPC application number 98650039.5 for VEHICULAR COMPONENT ASSEMBLY WITH HARD COATED ELEMENT, published on January 20, 1999 under publication number EP 0892209, the disclosure of which is hereby incorporated herein by reference. Outer optic 124 may also be heatable to defog or defrost its surfaces. Outer optic 124 may therefore be formed by a glass or plastic and coated with an indium tin oxide (ITO) transparent conductor or a doped tin oxide, or may include a wire mesh or a conductive coating mesh, as a heating element. Furthermore, outer surface 124a may be coated with an anti-soiling or anti-wetting coating, such as a silicone material, which may provide either a hydrophobic or hydrophilic property to the optic. Although described as a polycarbonate or acrylic element, outer optic 124 may alternately be a crown glass element or the like without affecting the scope of the present invention.

Preferably, focusing lens 118 functions to focus an image corresponding to a field of view of approximately 50 degrees. Wide angle lens 116 functions to refract a wide angle field of view of approximately 170 degrees toward receiving end 118a of focusing lens group 118, such that focusing lens group 118 may focus and correct for distortions and other aberrations within the refracted image, thereby providing image capture device 120 with a focused image representing a wide angle field of view. Because wide angle lens 116 and positive lens group 118 are preferably formed from polycarbonate and/or acrylic materials, the diffractive elements and other surface curvatures may be easily and inexpensively formed in the molding processes, thereby allowing the imaging system to be inexpensively manufactured with a minimal number of optic elements, in contrast to the ten or more expensive glass or precision optic elements required in conventional systems.

Image capture device 120 receives the focused image from focusing lens 118. Although various camera devices may be utilized, a pixelated-imaging array is preferred for image capture device 120. An example of such an imaging array is a CMOS imaging array or the like, a detailed description of which is disclosed in the above referenced United States Patent Nos. 5,550,677 and 5,670,935, issued to Schofield et al. However, other devices such as a CCD or a MOS may also be used. The preferred image capture device 120 is thus a low cost camera device, yet still provides an effective means for receiving the image.

The corrective refractive and diffractive elements of wide angle imaging system 110 are positioned along the optic path between wide angle outer optic 124 and image capture device 120. Additional corrective elements may also be included to further correct color or distortion within the refracted image. Diffractive elements are preferably included to correct the color focusing within the refracted image. The diffractive element or elements may further include an aspheric refractive lens element attached thereto or on an opposite surface of the respective optic element to further correct for distortions and aberrations within the image. Preferably, these refractive lens elements may also be transparent plastic lens elements, having a varying width, such that the image passing through the refractive lens is refracted in varying degrees, corresponding to the magnitude of distortion in the image received by the refractive optics. Therefore, either by themselves, or in conjunction with image capture device 120, the refractive and/or diffractive optic elements function as a means for correcting distortions within the image.

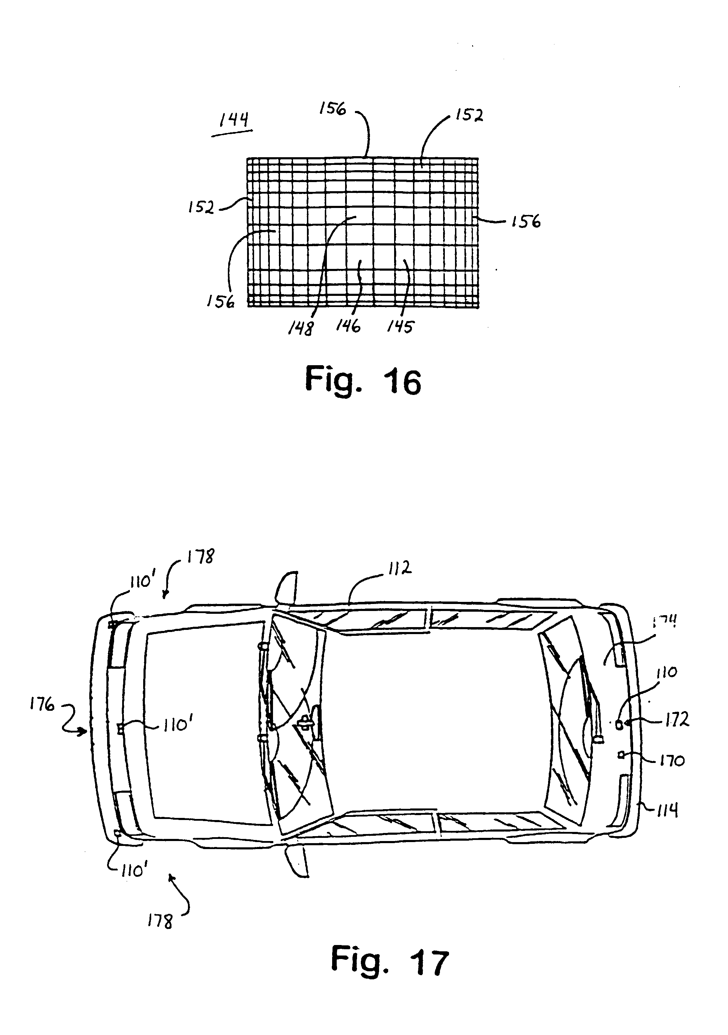

In an alternate embodiment, image capture device 120 may be capable of reducing distortion of the captured image. Similar to the array 44 discussed above with respect to Fig. 7, this is accomplished by a non-uniform array 144 of electro-optic pixels 145, as shown in Fig. 16. Non-uniform array 144 has a coarse distribution of pixels 146 in a center region 148, while having a finer distribution of pixels 152 along the perimeter regions 156. This non-uniform pixelation of array 144 receives the focused image and varies correspondingly with the magnitude of distortion in the image refracted through the lenses 116 and 118. The image received by non-uniform array 144 is then communicated to display 122, which includes a uniform array of display pixels (not shown), corresponding to non-uniform array 144, for simultaneously displaying the captured image. The combination of the non-uniform pixelation of array 144 and the uniform pixelation of display 122 has the effect of reducing distortion of the image as would be apparent to the skilled artisan. More particularly, center region 148 of non-uniform array 144 receives portions of the image that are refracted through center region 124d of outer wide angle optic 124, where the distortion is minimized. Conversely, the finer distribution of pixels 152 on non-uniform array 144 receive portions of the image having greater distortion, which are refracted through the outer edges 124e of outer optic 124 and represent an upper area, a lower area and side regions 164 and 168 (Fig. 14) of the scene rearward of vehicle 112. Therefore, when the finer pixel distribution 152 is communicated and synthesized onto the uniform array, the image received by finer pixels 152 is expanded, thereby correcting for the compressive distortion in these areas of the image. While this may require some interpolation between the finer pixels 152, the resultant image displayed to the vehicle operator has reduced distortion, especially in the critical areas, without extensive electronic processing of the image or requiring additional refractive lens elements. It should be understood that the distribution of pixels is selected to remove distortion from the particular refracted image and may be different for other optic designs.

Although shown and described as a wide angle imaging system positionable within a rear panel 174 (Fig. 17) of vehicle 112, it is also envisioned that an imaging system 110' consistent with the present invention may be positioned along a forward portion 176 or side portion 178 of a vehicle. This would provide a wide angle view of the area immediately forward or to the side of the vehicle to an operator of the vehicle. Furthermore, additional lenses and image capture devices may be implemented to provide the operator with scenic information of these and other areas surrounding the vehicle. The operator may selectively operate the display to determine which scene may be displayed or the control may selectively operate the system in response to a driver or vehicle input.

Image capture device 20, 120 may be fixedly secured within the rear panel or other panels of vehicle 12, 112, or may be movable, such as by a joystick or the like, to provide the driver with a different view point if desired. Furthermore, the image capture device may include a remotely operable zoom lens and/or variable focus or the like. Alternatively, the camera may be fixed, while the ability to pan or zoom within the wide field of view captured by the image capture device may be provided by electronic image processing of the image displayed to the driver. The image capture device may also be connected to an image recording system to allow the driver to record the events occurring rearward of the vehicle. Additionally, the image capture device may also measure the contrast ratio of the exterior scene to determine when visibility conditions change around the vehicle. The imaging system may then provide a warning to the driver to slow down as visibility decreases. The warning may be provided in the display or elsewhere within the vehicle as a visual or audio communication. Because drivers tend to drive faster as the scenic information becomes less visible, since they lose reference to ground movements and cannot readily discern how fast they are driving, such a warning system reduces the likelihood that the driver will increase the speed of the vehicle as conditions worsen.

The signal from image capture device 20, 120 to display 26, 122 may be communicated over any form of transmission including fiber optic cables or the like. The display is preferably positioned within the vehicle for easy viewing of the display by the operator of the vehicle. The display may be a liquid crystal display (LCD) or the like, and displays an image as received from the image capture device. Preferably, display 26, 122 displays the image at a focal length that is forward of the vehicle passenger compartment, as disclosed in published PCT application, international publication WO 96/38319, published December 5, 1996, the disclosure of which is hereby incorporated herein by reference.

It is further envisioned that the wide angle imaging system may include electronic image processing or distortion correction to further correct the image displayed on display 26, 122. The distortion correction process may be performed by an image processing algorithm or by pixel distribution variation on an image capture device and/or an associated display. Preferably, the system may display a vehicle reference, such as a front or rear bumper or side of the vehicle, depending on the location of the imaging system, as is seen outside the vehicle, so as to provide a sense of correctness to the image displayed to the driver. For example, an image processing algorithm may be provided which ensures that straight horizontal and/or vertical lines in the scenic information exteriorly of the vehicle are displayed as straight horizontal and/or vertical lines in the image displayed on display 26, 122. Such processing allows the imaging system to implement a convex or even spherical reflector or the like, or a wide angle lens, and still provide a substantially realistic display image to the driver.

Because it may be difficult for a driver to precisely judge distances between the vehicle and an object shown in the display 26, 122, a ranging device 94, 170 may be included in an imaging system (Figs. 13 and 17, respectively). The ranging device measures the distance to an object positioned exteriorly of the vehicle within the image received by the image capture device, and a signal may then be communicated to the driver which varies with the proximity of the object to the vehicle. The ranging device may be ultrasonic, radar, stereo imaging or the like, with the distances measured being displayed on the display. Alternatively, the proximity of the object may be linked to the color or flashing of the display or an auxiliary display or to an intensity or rate of an audio signal or tone. It is further envisioned that such a ranging device and signal may be implemented in a conventional camera system as well as the embodiments of the present invention.

In order to provide the driver with scenic information when ambient lighting conditions are low, the imaging system may include a flood light or other illumination source 96, 172 to provide illumination to the desired area (Figs. 13 and 17, respectively). The illumination source may be an incandescent or non-incandescent light such as a solid state light emitting diode (LED), electro-illuminescent material or the like, and may provide visible light or near-infrared or non-visible infrared illumination. The image capture device may further include a material which is efficient in detecting near-infrared radiation. Additionally, the convex reflector and/or flat reflective surface, if applicable, may also be efficient in reflecting such radiation.

Because visible rearward lighting may annoy drivers of other vehicles, the illumination source 96, 172 preferably emits illumination in the near-infrared region, such as 0.7 microns to 2.5 microns of the electro-magnetic radiation spectrum or beyond. Because this spectral region is not visible to human eyes, yet is received by imaging array sensors, this near-infrared illumination may provide visibility to the image capture device in low ambient lighting conditions while the vehicle is reversing, while avoiding potential annoyance of other drivers. Preferably, the illumination source will only be activated at times when it is needed. For example, the illumination source may be locked out whenever the vehicle ignition is on, unless the reverse gear is also activated. Additionally, a photo-sensor control may be included in the wide angle imaging system to allow for activation of the illumination source only in low ambient light conditions. A photo-sensor may be positioned at various locations on or within the vehicle, such as, for example, on the image capture device itself. The output of the photo-sensor and the status of the reverse gear and/or vehicle ignition may be considered separately or in combination to determine whether the illumination source may be activated. The illumination source may also, or alternatively, be activated by voice command from the driver. Although discussed with respect to the low cost wide angle lens systems of the present invention, application of illumination source 96 and/or 172 is not intended to be limited to such systems, and may alternatively be implemented with a conventional camera and lens system.

A control device may also be provided to drive a configurable instrument panel within the vehicle. The control may be a track ball type device, or other manual control device such as a joystick, touchpad or the like, which allows the driver to easily manipulate a visual menu in the instrument panel or to change the display image. Alternatively, the control device may drive a voice menu, which allows the driver to navigate the menu by voice without taking the driver's attention from the road. The menu may include controls for a radio, cabin temperature or the like. It is further envisioned that such a device may also be implemented in a conventional camera and lens system.

Therefore, it is seen that a vehicular vision system is disclosed which comprises fewer components than a conventional lens system, thus facilitating compact packaging of the system. This results in a low-cost and light-weight system having only a minimal number of components, none of which are expensive glass lenses or the like, yet still providing a wide angle field of view to a vehicle operator. In particular, diffractive elements are included to provide optimal focusing of the colors on the image capture device. Additionally, aspheric, refractive lens elements may be positioned along the optic path along with the diffractive elements to also correct for some of the distortion in the image before it is received by the image capture device. These corrective elements also minimize other aberrations within the image, such as coma and astigmatism.

In order to correct for the remaining distortion which may be present in the image as it is received by the image capture device, the image capture device may incorporate image distortion correction without implementing costly electronic processing devices and algorithms. The image capture device, which is preferably a CMOS imaging array or the like, may include an imaging array that is a non-uniform distribution of image capturing pixels. By receiving the distorted image on a non-uniform array, the image is then substantially corrected by electronically reproducing the captured image on a uniform array of the display of the present invention.

The wide angle imaging system of the present invention therefore provides a low cost system for providing information surrounding the vehicle, such as rearward scenic information of an area directly rearward of the vehicle, which requires fewer components than commercially available systems requiring ten or more precision optic elements. Furthermore, the components of the present invention are inexpensive and robust elements, thus further reducing the costs relative to conventional systems, while increasing the durability of the imaging system. An additional benefit is that the low cost plastic lenses also reduce the overall weight of the imaging system relative to the substantially heavier glass systems.

Changes and modifications in the specifically described embodiments can be carried out without departing from the principles of the invention, which is intended to be limited only by the scope of the appended claims, as interpreted according to the principles of patent law including the doctrine of equivalents.

**Claims**

**1.** A vehicular vision system, comprising:

a reflector adapted to be mounted on a portion of a vehicle for reflecting an image of a scene exterior of the vehicle;
an image capture device which is adapted to receive an image reflected from said reflector; and
a display system which displays an image from an output of said image capture device.

**2.** The vision system of Claim 1, further including a mirrored surface positioned in an optic path from said reflector to said image capture device and adapted to redirect the reflected image toward said image capture device.

**3.** The vision system of Claim 2, wherein said mirrored surface is positioned substantially below said reflector and said image capture device such that said reflector reflects an image substantially downward toward said mirrored surface and said mirrored surface reflects the image upward toward said image capture device.

**4.** The vision system of Claim 2, wherein said mirrored surface is positioned substantially towards a side of the vehicle relative to said reflector and said image capture device such that said reflector reflects an image substantially sidewardly toward said mirrored surface and said mirrored surface reflects the image sidewardly toward said image capture device.

5. The vision system of any preceding Claim, further including a diffractive element positioned in an optic path from said reflector to said image capture device, whereby said diffractive element adjusts for at least color distortions in the reflected image.

6. The vision system of any preceding Claim, further including a corrective optic positioned in an optic path between said reflector and said image capture device, whereby said corrective optic at least reduces distortions and aberrations within the reflected image.

7. The vision system of any preceding Claim, wherein said image capture system measures a contrast ratio of the image exterior scene to determine when visibility conditions change.

8. The vision system of Claim 7, wherein said image capture system communicates information to a driver of the vehicle which varies according to the contrast ratio.

9. The vehicular vision system of any preceding Claim, wherein said reflector has a convex reflective surface which is curved outwardly about a generally central axis thereof.

10. The vehicular vision system of Claim 9, wherein said reflector is configured to provide a broad horizontal field of view exteriorly of the vehicle.

11. The vehicular vision system of Claim 10, wherein said reflector is positioned at a rear portion of the vehicle, said field of view capturing an image which includes a portion of a rear bumper of the vehicle and extends upward to above said substantially horizontal line extending from said rearward edge of said reflector.

12. The vehicular vision system of Claim 9, wherein said reflector defines at least one surface having varying radii of curvature.

13. The vehicular vision system of claim 9, wherein said reflector is shaped to provide a reflection with a minimal amount of distortion at a bottom and a center portion of the reflected image with slightly greater distortion along an upper edge of the reflected image.

14. The vision system of any preceding Claim, wherein said reflector is mounted on an exterior surface of the vehicle and said image capture device is mounted interiorly of said exterior surface, said exterior surface including a transparent portion through which the reflected image is projected toward said image capture device.

15. The vision system of any preceding Claim, wherein said image capture device is a pixelated-imaging array.

16. The vision system of Claim 15, wherein said image capture device receives the reflected image on an array made of a non-uniform distribution of a plurality of pixels, said display system including a substantially uniform distribution of a plurality of pixels.

17. The vision system of any preceding Claim, further including a second reflector oriented substantially opposite said reflector and a second mirrored surface positioned along a second optic path between said second reflector and said image capture device, said reflector and said second reflector reflecting discontinuous images toward said image capture device.

18. The vision system of Claim 17, wherein said reflector and said second reflector are positioned on a rearward portion of the vehicle and each one oriented to reflect an image of an area which is downward and substantially toward a side of the vehicle, said reflector reflecting an image of an area at one side and said second reflector reflecting an image of an area at another side of the vehicle.

19. The vision system of Claim 18, wherein said reflector and said second reflector are positioned on a forward portion of the vehicle and each one oriented to reflect an image of an area which is downward and at a side of the vehicle.

20. A vehicular vision system as claimed in Claim 1, wherein: the reflector is a convex reflector positioned on a portion of the vehicle body and having an aspheric reflective surface that is asymmetrical with respect to a generally central axis thereof, said convex reflector creating a reflected image of the scene directly rearward of the vehicle; and the display system receives and displays a corrected, substantially non-distorted image synthesized from an output of an image capture device, wherein said image capture device is oriented off of said axis of said convex reflector.

21. The vehicular vision system of Claim 15, wherein said image capture device includes a non-uniform array of pixels, said non-uniform array having a coarse distribution of said pixels in portions corresponding to the reflected image where there is minimal distortion and a fine distribution of said pixels in portions corresponding to the reflected image where there is greater distortion, the reflected image being received by said non-uniform pixels and communicated to a uniform array on said display, said display thereby receiving and displaying a uniform, substantially non-distorted image to the operator of the vehicle.

22. The vision system of any preceding Claim, wherein at least one of said image capture device and said display system are occasionally activated in response to one of an input from one of a driver and the vehicle.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 18

Fig. 15

EP 1 004 916 A1

Fig. 16

Fig. 17

European Patent Office

## EUROPEAN SEARCH REPORT

Application Number

EP 99 65 0112

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 416 222 A (VDO SCHINDLING) 13 March 1991 (1991-03-13) * column 1, line 36 - line 51 * * column 2, line 48 - column 3, line 1 * | 1,2,6,15 | G02B17/00 B60R1/00 |
| X | US 5 648 835 A (UZAWA TSUTOMU) 15 July 1997 (1997-07-15) * column 1, line 63 - column 2, line 18 * * column 4, line 1 - line 25; figures 1,3 * | 1,6,14 | |
| X | FR 2 241 085 A (GUY GILBERT) 14 March 1975 (1975-03-14) * page 2, line 31 - page 3, line 17 * * page 5, line 7 - line 10 * | 1,2,14 | |
| X | US 3 947 095 A (MOULTRIE CHARLES W) 30 March 1976 (1976-03-30) * column 1, line 47 - column 2, line 19; figure 1 * | 1,2,14 | |
| X | DE 29 31 368 A (AUDI NSU AUTO UNION AG) 19 February 1981 (1981-02-19) * page 4, paragraph 2 - page 5, paragraph 1 * * page 5, paragraph 3; figure 1 * | 1,6 | TECHNICAL FIELDS SEARCHED (Int.Cl.7) G02B B60R |
| P,X | GB 2 327 823 A (LEY NIGEL GEOFFREY) 3 February 1999 (1999-02-03) * claims 1,8 * | 1,17,22 | |
| D,A | US 5 670 935 A (SCHOFIELD KENNETH ET AL) 23 September 1997 (1997-09-23) * abstract; figure 1 * | 1 | |

-/--

The present search report has been drawn up for all claims

| Place of search | Date of completion of the search | Examiner |
|---|---|---|
| THE HAGUE | 24 February 2000 | Mollenhauer, R |

European Patent Office

**EUROPEAN SEARCH REPORT**

Application Number

EP 99 65 0112

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 760 828 A (CORTES LUIS LEON LAMATA) 2 June 1998 (1998-06-02) * column 3, line 34 - line 41 * * column 4, line 50 - line 56 * * figure 1 * | 1 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 24 February 2000 | Mollenhauer, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 004 916 A1

**ANNEX TO THE EUROPEAN SEARCH REPORT
ON EUROPEAN PATENT APPLICATION NO.**                     EP 99 65 0112

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2000

| Patent document cited in search report | | Publication date | Patent family member(s) | | Publication date |
|---|---|---|---|---|---|
| EP 0416222 | A | 13-03-1991 | DE | 3929842 A | 14-03-1991 |
| US 5648835 | A | 15-07-1997 | JP | 6107070 A | 19-04-1994 |
| | | | JP | 6148518 A | 27-05-1994 |
| | | | US | 5448319 A | 05-09-1995 |
| FR 2241085 | A | 14-03-1975 | NONE | | |
| US 3947095 | A | 30-03-1976 | CA | 1015991 A | 23-08-1977 |
| DE 2931368 | A | 19-02-1981 | NONE | | |
| GB 2327823 | A | 03-02-1999 | NONE | | |
| US 5670935 | A | 23-09-1997 | US | 5550677 A | 27-08-1996 |
| | | | AU | 5924696 A | 18-12-1996 |
| | | | EP | 0830267 A | 25-03-1998 |
| | | | WO | 9638319 A | 05-12-1996 |
| | | | US | 5949331 A | 07-09-1999 |
| | | | DE | 69406427 D | 27-11-1997 |
| | | | DE | 69406427 T | 19-03-1998 |
| | | | EP | 0683738 A | 29-11-1995 |
| | | | EP | 0788947 A | 13-08-1997 |
| | | | HK | 1002429 A | 21-08-1998 |
| | | | JP | 8507020 T | 30-07-1996 |
| | | | WO | 9419212 A | 01-09-1994 |
| | | | US | 5877897 A | 02-03-1999 |
| | | | US | 5796094 A | 18-08-1998 |
| | | | US | 5760962 A | 02-06-1998 |
| US 5760828 | A | 02-06-1998 | ES | 1028357 U | 16-01-1995 |
| | | | DE | 69509040 D | 20-05-1999 |
| | | | DE | 69509040 T | 23-12-1999 |
| | | | EP | 0711681 A | 15-05-1996 |
| | | | WO | 9533634 A | 14-12-1995 |
| | | | JP | 9504494 T | 06-05-1997 |

EPO FORM P0459

For more details about this annex : see Official Journal of the European Patent Office, No. 12/82

28